(19) **Europäisches Patentamt / European Patent Office / Office européen des brevets**

(11) **EP 4 765 976 A1**

(12) **EUROPEAN PATENT APPLICATION**
published in accordance with Art. 153(4) EPC

(43) Date of publication:
**24.06.2026 Bulletin 2026/26**

(21) Application number: **24867473.1**

(22) Date of filing: **19.09.2024**

(51) International Patent Classification (IPC):
**H04W 72/044** (2023.01)

(52) Cooperative Patent Classification (CPC):
**H04B 7/06; H04B 7/08; H04W 16/28;**
**H04W 72/044; H04W 72/231; H04W 72/232**

(86) International application number:
**PCT/CN2024/119554**

(87) International publication number:
**WO 2025/061067 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.09.2023 CN 202311234784**

(71) Applicant: **Sony Group Corporation**
**Tokyo 108-0075 (JP)**

(72) Inventors:
- **SUN, Chen**
  **Beijing 100027 (CN)**
- **LI, Haojin**
  **Beijing 100027 (CN)**

(74) Representative: **D Young & Co LLP**
**3 Noble Street**
**London EC2V 7BQ (GB)**

(54) **ELECTRONIC DEVICE AND METHOD FOR BEAM MANAGEMENT, AND COMPUTER PROGRAM PRODUCT**

(57)     The content of the present disclosure relates to an electronic device and method for beam management, and a computer program product. Described are various embodiments for executing beam management in a wireless communication system. In an embodiment, the electronic device comprises a processing circuit, wherein the processing circuit is configured to: send an integrated sensing and communication signal by means of a first group of multiple transmitting beams; in response to the sending of the integrated sensing and communication signal, receive a first group of echo signals corresponding to a terminal device; estimate the position of the terminal device on the basis of the first group of echo signals; and send a first notification to the terminal device, such that the terminal device can determine a first receiving beam which matches a base station.

**400**

Transmit an integrated sensing and communication signal 402

↓

Receive a set of echo signals corresponding to a terminal device 404

↓

Estimate a position of the terminal device based on the set of echo signals 406

↓

Perform beam management based on the estimated position 408

**FIG. 4**

## Description

TECHNICAL FIELD

The present disclosure generally relates to wireless communication, including technologies for beam management in wireless communications systems.

BACKGROUND

Widespread deployment of wireless communications systems has unprecedentedly addressed voice and data communication requirements. To implement pervasive intelligent information networks, the wireless communications systems utilize diverse techniques across different protocol layers. In terms of antenna technology, the number of antenna elements on the base station side can be increased to hundreds, thousands, or even more, forming antenna arrays. In such antenna arrays, the beamforming technology will have broader application prospects.

In millimeter-wave communication and future 6G terahertz communication, the number of beam pairs will increase substantially. Efficient beam sweeping, beam pairing, and beam tracking are highly desirable.

SUMMARY

A first aspect of the present disclosure relates to a method for a base station, including: transmitting an integrated sensing and communication signal via a first set of multiple transmit beams; in response to transmitting the integrated sensing and communication signal, receiving a first set of echo signals corresponding to a terminal device; estimating a position of the terminal device based on the first set of echo signals; and sending a first notification to the terminal device, so that the terminal device can determine a first receive beam matching the base station. The first aspect of the present disclosure further relates to an electronic device and a base station for executing the method.

A second aspect of the present disclosure relates to a method for a base station, including: establishing a beam pair link with a terminal device using a first transmit beam, and transmitting an integrated sensing and communication signal via the first transmit beam at a first transmission frequency; in response to transmitting the integrated sensing and communication signal, receiving a first set of echo signals corresponding to the terminal device; obtaining a mobility state of the terminal device based on the first set of echo signals; and determining a to-be-tracked receive beam of the terminal device based on the mobility state of the terminal device. The second aspect of the present disclosure further relates to an electronic device and a base station for executing the method.

A third aspect of the present disclosure relates to a method for a terminal device, including: determining a first receive beam matching a base station from a first set of multiple receive beams based on a first notification received from the base station; receiving, via the first set of multiple receive beams, an integrated sensing and communication signal transmitted by the base station via a transmit beam; and verifying whether the first receive beam is an optimal receive beam matching the base station, based on a measurement on the integrated sensing and communication signal. The first aspect of the present disclosure further relates to an electronic device for executing the method. The third aspect of the present disclosure further relates to an electronic device and a terminal device for executing the method.

A fourth aspect of the present disclosure relates to a method for a terminal device, including: establishing a beam pair link with a base station using a first receive beam; initiating or stopping sensing measurement on an integrated sensing and communication signal transmitted by the base station, based on a notification received from the base station; and feeding back a measurement result to the base station. The fourth aspect of the present disclosure further relates to an electronic device and a terminal device for executing the method.

A fifth aspect of the present disclosure relates to a computer-readable storage medium, where executable instructions are stored therein, and when the executable instructions are executed by one or more processors, operations of the method according to various embodiments in the present disclosure are implemented.

A sixth aspect of the present disclosure relates to a computer program product, where the computer program product includes instructions, and when the instructions are executed by a computer, the computer is caused to perform the method according to various embodiments in the present disclosure.

The above summary is provided to summarize some example embodiments in order to provide a basic understanding of the various aspects of the subject matter described herein. Therefore, the above-described features are merely examples and should not be construed as limiting the scope or spirit of the subject matter described herein in any way. Other features, aspects, and advantages of the subject matter described herein will become apparent from the Detailed Description described below in conjunction with the drawings.

BRIEF DESCRIPTION OF DRAWINGS

A better understanding of the present disclosure can be achieved by referring to the detailed description given hereinafter in connection with the accompanying drawings. The same or similar reference numerals are used in the accompanying drawings to denote the same or similar components. The accompanying drawings together with the following detailed description are included in the specification and form a part of the specification, and are used to exemplify the embodiments of the present disclosure and explain the principles and advantages of the present disclosure, where:

FIG. 1 illustrates an example block diagram of a wireless communications system according to an embodiment of the present disclosure.

FIG. 2 illustrates an example diagram of beam sweeping and pairing according to an embodiment of the present disclosure.

FIG. 3A illustrates an example electronic device for a base station configured to implement embodiments of the present disclosure.

FIG. 3B illustrates an example electronic device for a terminal device configured to implement embodiments of the present disclosure.

FIG. 4 illustrates an example operation of sensing-assisted beam management according to an embodiment of the present disclosure.

FIG. 5 illustrates an example procedure of beam sweeping and pairing according to an embodiment of the present disclosure.

FIG. 6 illustrates another example procedure of beam sweeping and pairing according to an embodiment of the present disclosure.

FIG. 7 illustrates an example of transmission configuration indication (TCI) state according to an embodiment of the present disclosure.

FIG. 8 illustrates an example procedure of beam tracking according to an embodiment of the present disclosure.

FIG. 9 illustrates another example procedure of beam tracking according to an embodiment of the present disclosure.

FIG. 10 illustrates still another example procedure of beam tracking according to an embodiment of the present disclosure.

FIG. 11 illustrates another example operation of sensing-assisted beam management according to an embodiment of the present disclosure.

FIG. 12 illustrates still another example operation of sensing-assisted beam management according to an embodiment of the present disclosure.

FIG. 13 is an example block diagram of a computer configured to be implemented as a terminal device or a base station according to an embodiment of the present disclosure.

FIG. 14 is a block diagram illustrating a first example of a schematic configuration of a gNB to implement the technology of the present disclosure.

FIG. 15 is a block diagram illustrating a second example of a schematic configuration of a gNB to implement the technology of the present disclosure.

FIG. 16 is a block diagram illustrating an example of a schematic configuration of an smartphone to implement the technology of the present disclosure.

FIG. 17 is a block diagram illustrating an example of a schematic configuration of a car navigation device to implement the technology of the present disclosure.

Although the embodiments described in the present disclosure may have various modifications and alternatives, specific embodiments thereof are illustrated as examples in the accompany drawings and described in detail in this specification. It should be understood that the drawings and detailed description thereof are not intended to limit embodiments to the specific forms disclosed, but to cover all modifications, equivalents, and alternatives falling within the spirit and scope of the claims.

DESCRIPTION OF EMBODIMENTS

The following describes representative applications of various aspects of the device and method according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

Generally, all terms used herein will be interpreted in accordance with their ordinary meaning in the related art, unless different meanings and/or implications are clearly given in the context. Unless otherwise expressly stated, references to elements, apparatuses, components, units, and operations are intended to be interpreted openly as at least one instance of the elements, the apparatuses, the components, the units, and the operations. Operations of any method disclosed herein need not be performed in the exact order disclosed unless the operations are explicitly or implicitly described after or before another operation. Any feature of any embodiment disclosed herein may be applied to any other suitable embodiment. Similarly, any advantage of any embodiment may be applied to any other embodiment, and vice versa. Other objects, features, and advantages of the embodiments will become apparent from the following descriptions.

Example of wireless communications system

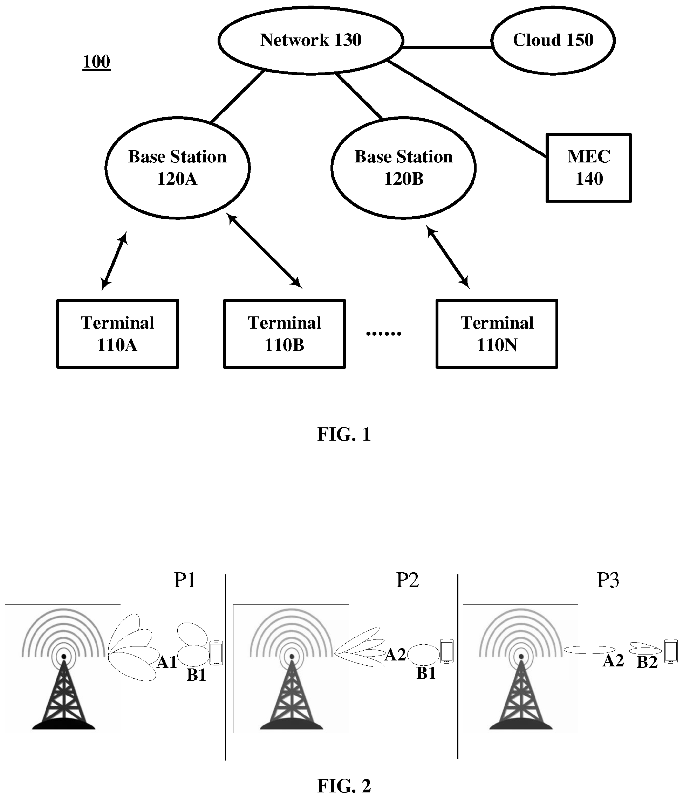

FIG. 1 illustrates an example block diagram of a wireless communications system according to an embodiment of the present disclosure. It should be noted that FIG. 1 illustrates only one of multiple types and possible layouts of wireless communications systems, and features of the present disclosure can be implemented in any one of the various systems as required.

As shown in FIG. 1, the communications system 100 includes base stations 120A and 120B, and terminal devices 110A, and 110B to 110N. The base station and the terminal may be configured to perform communication via uplink and downlink channels. The base stations 120A and 120B may be configured to communicate with a network 130 (for example, a core network of a cellular service provider, or a telecommunications network such as a public switched telephone network (PSTN) and/or the internet). Therefore, the base stations 120A and 120B may facilitate communication between the terminal devices 110A to 110N and/or between the terminal devices 110A to 110N and the network 130.

In FIG. 1, coverage areas of the base stations 120A and 120B may be referred to as cells. The base stations 120A and 120B can perform operations based on one or more radio access network technologies, to provide continuous or nearly continuous communication signal coverage to the terminal devices 110A to 110N over a wide geographic area.

As shown in FIG. 1, the communications system 100 includes a cloud 150, and a mobile edge computing (MEC) 140. The cloud 150 may provide a service such as IaaS, PaaS, and SaaS for terminal devices over a connection with the network 130. In the cloud 150 and the MEC 140, computing resources may be deployed to support computing requirements that meet communication services (for example, a communication computing convergence service).

In the present disclosure, the base station may be a 5G NR base station or a 5G LTE-A base station, for example, a gNB and an ng-eNB. The gNB may provide an NR user plane protocol and a control plane protocol for terminating with the terminal device. The ng-eNB is a node defined for compatibility with a 4G LTE communications system, and may be an upgrade of an evolved NodeB (eNB) of an LTE radio access network, providing an evolved universal terrestrial radio access (E-UTRA) user plane and control plane protocol for terminating with the UE. In addition, examples of base stations may include but are not limited to at least one of a base transceiver station (BTS) and a base station controller (BSC) in a GSM system; at least one of a radio network controller (RNC) and a Node B in a WCDMA system; access points (APs) in WLAN and WiMAX systems; and corresponding network nodes in the communications system to be developed or being developed. In this specification, some functions of the base station may alternatively be implemented as an entity that has a control function on communication in a scenario of D2D, M2M, and V2X, or as an entity that performs spectrum coordination in a cognitive radio communication scenario.

In the present disclosure, the terminal device may encompass its full range of common meanings. For example, the terminal device may be a mobile station (MS) or user equipment (UE). The terminal device can be implemented as a device such as a mobile phone, a handheld device, a media player, a computer, a laptop computer, a tablet computer, an on-board unit (OBU), a vehicle, a roadside unit (RSU), a wearable device, an Internet of things (IoT) device, or a wireless device of almost any type. In some cases, the terminal device may perform communication by using a plurality of wireless communications technologies. For example, the terminal device may be configured to communicate with one or more of GSM, UMTS, CDMA2000, WiMAX, LTE, LTE-A, WLAN, NR, Bluetooth, and the like.

Example procedure of beam sweeping and pairing

High-frequency-band millimeter-wave communication is an important direction for mobile communications. Compared to low-frequency-band transmission, millimeter-wave suffers from larger path loss and poorer reflection and diffraction capabilities. Therefore, larger-scale antenna arrays are typically adopted to achieve higher beamforming gains. Beamforming includes fully-digital beamforming. In fully-digital beamforming, each antenna in the antenna array has an independent digital link channel, enabling control of amplitudes and phases of digital signals at baseband. Due to the limited physical size of millimeter-wave antenna arrays, considering hardware complexity, costs, and power consumption, hybrid beamforming that combines analog beamforming and digital beamforming is more practical.

During link transmission using analog beamforming technology, in order to obtain optimal beam performance, transmit/receive beam sweeping is typically adopted to search for the best matching transmit and receive beam pair. A base station can form only a limited number of analog beams at the same time (the number of beams depends on the number of digital ports; and one digital port corresponds to one beam), and the beam width is relatively narrow, typically covering only a portion of the cell. Therefore, synchronization signals and system broadcast messages for initial access need to be broadcast over the entire cell to achieve full cell coverage. That is, the formed beams sequentially cover different areas of the cell to achieve complete cell coverage.

FIG. 2 illustrates an example diagram of beam sweeping and pairing according to an embodiment of the present disclosure. In the example of FIG. 2, beam sweeping and pairing are implemented through three processes P1 to P3. In the P1 process, a base station (for example, either of 120A and 120B) transmits reference signals via multiple transmit beams to perform beam sweeping. The reference signals may be, for example, channel state information reference signals (CSI-RS) or synchronization signal blocks (SSB). The multiple transmit beams are, for example, wide beams with weaker directionality and larger coverage. Correspondingly, the terminal device (for example, any one of 110A to 110N) receives, using one or more wide receive beams, the reference signals transmitted by the base station via the multiple transmit beams, and reports a beam sweeping result to the base station. For example, the terminal device separately measures received powers of the reference signals transmitted via the multiple transmit beams, and reports to the base station a transmit beam with the best reception performance (for example, a transmit beam A1 with the highest reference signal received power). Correspondingly, the base station determines the transmit beam A1 as the beam matching the terminal device; the terminal device determines a receive beam with the best reception performance (for example, a receive beam B1 with the highest reference signal received power) as the beam matching the base station. The transmit beam A1 on the side of the base station and the receive beam B1 on the side of the terminal device form paired transmit/receive beams. In the P1 process, assuming the base station side has M transmit beams and the terminal device side has N receive beams, M×N beam transmissions are required to complete the beam sweeping.

In the P2 process, the base station forms multiple narrow beams near the transmit beam A1. For example, forming multiple narrow beams near the transmit beam A1 includes forming narrow beams within the coverage area of the transmit beam A1 and in adjacent areas. The base station transmits reference signals via the multiple narrow transmit beams to perform beam refinement among the multiple narrow transmit beams. Correspondingly, the terminal device receives, via the wide beam B1, the reference signals transmitted by the base station via the multiple narrow transmit beams, and reports a beam sweeping result to the base station. For example, the terminal device separately measures received powers of the reference signals transmitted via the multiple narrow transmit beams, and reports to the base station a transmit beam with the best reception performance (for example, a transmit beam A2 with the highest reference signal received power). Correspondingly, the base station determines the transmit beam A2 as the beam matching the terminal device.

In the P3 process, the base station transmits reference signals using the narrow transmit beam A2 determined in the P2 process. Correspondingly, the terminal device forms multiple narrow beams near the receive beam A1, and receives, via the multiple narrow receive beams, reference signals transmitted by the base station via the narrow transmit beam A2. For example, the terminal device separately measures reference signal received powers via the multiple narrow receive beams, and determines a narrow receive beam with the best reception performance (for example, a narrow receive beam B2 with the highest reference signal received power) as the beam matching the base station. The transmit beam A2 on the side of the base station and the receive beam B2 on the side of the terminal device form paired transmit/receive beams.

In embodiments of the present disclosure, as an addition or alternative to conventional reference signals, integrated sensing and communication (ISAC) signals may be used in beam management. Based on the sensing and measurement capabilities of the base station and the terminal device, the best matching transmit/receive beam pair between the base station and the terminal device can be efficiently determined in a shorter time with fewer beam sweeping operations.

Examples of electronic device

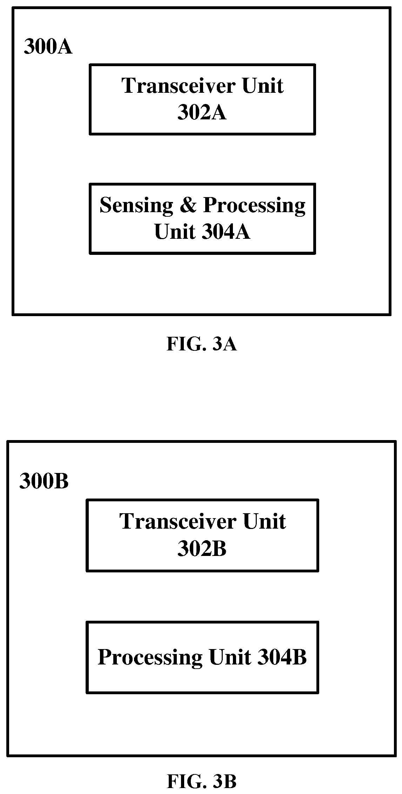

FIG. 3A illustrates an example electronic device for a base station (for example, a base station 120A or 120B) to implement embodiments of the present disclosure. The electronic device 300A may include various units to implement embodiments of beam management according to the present disclosure. In the example of FIG. 3A, the electronic device 300A includes a transceiver unit 302A and a sensing and processing unit 304A. The following operations described with reference to the base station and beam management may be implemented by the units 302A to 304A or other possible units of the electronic device 300A.

In an embodiment, the transceiver unit 302A may be configured to transmit integrated sensing and communication signals via a first set of multiple transmit beams, and, in response to transmitting the integrated sensing and communication signals, receive a first set of echo signals corresponding to a terminal device (for example, any one of terminal devices 110A to 110N). The sensing and processing unit 304A may be configured to estimate a position of the terminal device based on the first set of echo signals. The transceiver unit 302A may be further configured to send a first notification to the terminal device so that the terminal device can determine a first receive beam (for example, a beam A1) matching the base station.

In an embodiment, the transceiver unit 302A may be configured to establish a beam pair link with a terminal device (for example, any one of the terminal devices 110A to 110N) using a first transmit beam (for example, a beam B2), and to transmit an integrated sensing and communication signal via the first transmit beam at a first transmission frequency. The transceiver unit 302A may be configured to: in response to transmitting the integrated sensing and communication signal, receive a first set of echo signals corresponding to a terminal device. The sensing and processing unit 304A may be configured to obtain a mobility state of the terminal device based on the first set of echo signals. The sensing and processing unit 304A may be further configured to determine a to-be-tracked receive beam (for example, a beam other than the beam B2) of the terminal device based on the mobility state of the terminal device.

In an embodiment, the electronic device 300A may be implemented at a chip level, or may be implemented at a device level by including other external components (for example, a radio frequency link and an antenna). The electronic device 300A may operate as a whole unit and act as a communications device.

FIG. 3B illustrates an example electronic device for a terminal device (for example, any one of terminal devices 110A to 110N) to implement embodiments of the present disclosure. The electronic device 300B may include various units to implement embodiments of beam management according to the present disclosure. In the example of FIG. 3B, the electronic device 300B includes a transceiver unit 302B and a processing unit 304B. The following operations described with reference to the terminal device and beam management may be implemented by the units 302B to 304B or other possible units of the electronic device 300B.

In an embodiment, the processing unit 304B may be configured to determine a first receive beam matching a base station from a first set of multiple receive beams based on a first notification received from the base station (for example, a base station 120A or 120B). The transceiver unit 302B may be configured to receive, via the first set of multiple receive beams, an integrated sensing and communication signal transmitted by the base station via a transmit beam. The processing unit 304B may be further configured to verify whether the first receive beam is an optimal receive beam matching the base station, based on a measurement on the integrated sensing and communication signal.

In another embodiment, the transceiver unit 302B may be configured to establish a beam pair link with a base station (for example, the base station 120A or 120B) using a first receive beam. The processing unit 304B may be further configured to initiate or stop sensing measurement on an integrated sensing and communication signal transmitted by the base station, based on a first notification received from the base station. The transceiver unit 302B may be further configured to feed back a sensing result to the base station.

In an embodiment, the electronic device 300B may be implemented at a chip level, or may be implemented at a device level by including other external components (for example, a radio link and an antenna). The electronic device 300B may operate as a whole unit and act as a communications device.

It should be understood that the foregoing units are merely logical modules classified based on specific functions implemented by the units, and are not intended to limit a specific implementation manner, for example, may be implemented in a manner of software, hardware, or a combination of software and hardware. In actual implementation, the foregoing units may be implemented as independent physical entities, or may be implemented by a single entity (for example, a processor (CPU or DSP) or an integrated circuit). The processing circuit may refer to various implementations of a digital circuit system, an analog circuit system, or a hybrid signal (a combination of analog and digital) circuit system that performs functions in a computing system. The processing circuit may include, for example, a circuit such as an integrated circuit (IC), an application specific integrated circuit (ASIC), a part or circuit of a separate processor core, an entire processor core, a separate processor, a programmable hardware device such as a field programmable gate array (FPGA), and/or a system including multiple processors.

Sensing-assisted beam management

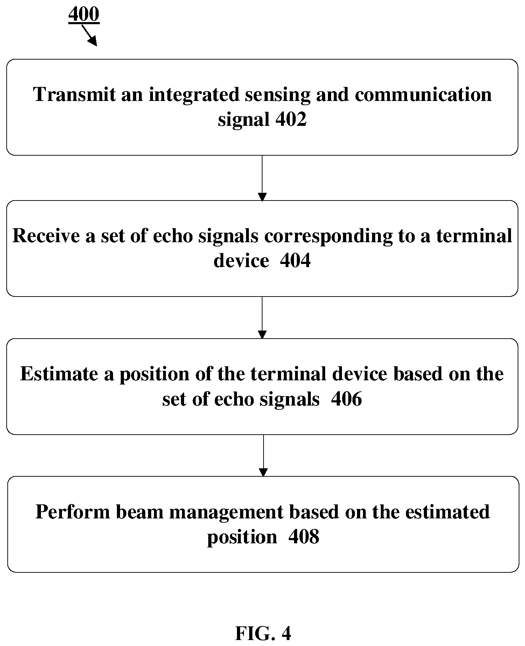

FIG. 4 illustrates an example operation of sensing-assisted beam management according to an embodiment of the present disclosure. The example operation 400 may be implemented by the base station (for example, a base station 120A or 120B in FIG. 1) or the electronic device 300A.

As shown in FIG. 4, the example operation 400 includes the base station 120A transmitting an integrated sensing and communication signal via multiple transmit beams (402), and, in response to transmitting the integrated sensing and communication signal, receiving a set of echo signals corresponding to a terminal device (for example, the terminal device 110A in FIG. 1) (404). It should be noted that, in high-frequency-band scenarios, the echo signals mainly include reflected signals corresponding to the terminal device 110A. The example operation 400 further includes the base station 120A estimating a position of the terminal device 110A based on the set of echo signals (406).

It should be understood that, through the operations 402 to 406, the base station 120A can achieve position sensing of the terminal device 110A based on the integrated sensing and communication signal. Depending on transmit beams used by the base station 120A to transmit the integrated sensing and communication signal, the position of the terminal device 110A relative to the base station 120A can be sensed with different accuracies. For example, in a case of using wider beams (for example, the beam A1 in FIG. 2), the base station 120A can sense a coarse position of the terminal device 110A. In a case of using narrower beams (for example, the beam A2 in FIG. 2), the base station 120A can sense a finer position of the terminal device 110A. In an embodiment, the base station 120A may sense at least one of a distance, a velocity, or an angle of the terminal device 110 A relative to the base station 120A based on information about a delay, a doppler frequency, and a phase difference of the set of echo signals. The base station 120A may further estimate the position of the terminal device 110A relative to the base station 120A based on at least one of the distance, the velocity, or the angle of the terminal device 110A relative to the base station 120A.

For example, the position of the terminal device 110A may be estimated by obtaining a radio frequency map of the propagation environment. In high-frequency-band scenarios, electromagnetic waves propagate mainly via reflection. The base station 120A may decompose a multipath channel into multiple LOS channels toward multiple anchor points. These anchor points are obtained by mirroring the base station 120A, which serves as a transmission point (TP), across a surface of scatterers on each path. Such transmission point may be referred to as a virtual transmission point (vTP). Using a co-located transceiver as an example, the base station 120A can measure a time delay between a transmit wave of the integrated sensing and communication signal and a target echo, so as to determine a distance between the terminal device 110A acting as a target and the base station 120A: $R = ct_R/2$, where $c$ is the speed of light. Target velocity measurement mainly uses the Doppler effect caused by motion of the terminal device 110A. The base station 120A can measure the doppler frequency of the echo signal to estimate a velocity of the terminal device 110A, where the doppler frequency is $f_d = 2v/\lambda$, $v$ being a target radial velocity and $\lambda$ being a signal wavelength. Target angle measurement is mainly performed using overlapping multi-beam or multi-phase-center operation at the antenna, and an angle of the terminal device 110A is measured based on intensity differences between echoes output from different beams or based on phase differences between target echoes output from multiple phase centers.

As shown in FIG. 4, the example operation 400 further includes the base station 120A performing beam management between the base station 120A and the terminal device 110A based on the estimated position of the terminal device 110A (408). For example, the estimated position of the terminal device 110A may be used to assist beam sweeping or beam tracking procedures. In an embodiment, the base station 120A may determine a paired transmit beam and/or receive beam between the base station 120A and the terminal device 110A based on the estimated position of the terminal device 110A, as described in detail below. In another embodiment, the base station 120A may determine a to-be-tracked receive beam of the terminal device 110A based on the estimated position of the terminal device 110A, as described in detail below.

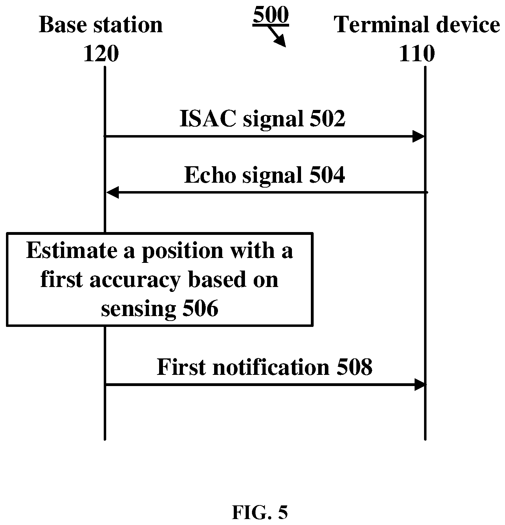

FIG. 5 illustrates an example procedure of beam sweeping and pairing according to an embodiment of the present disclosure. The example procedure 500 may be executed between a base station 120 (or an electronic device 300A) and a terminal device 110 (or an electronic device 300B). For example, the base station 120 may be either of base stations 120A and 120B in FIG. 1, and the terminal device 110 may be any one of terminal devices 110A to 110N in FIG. 1. In an embodiment, the example procedure 500 may be used to implement the P1 process of beam sweeping.

As shown in FIG. 5, at 502, the base station 120 transmits an integrated sensing and communication signal via a first set of multiple transmit beams. The first set of multiple transmit beams are relatively wide beams, for example, similar to a beam A1 in FIG. 2. In an embodiment, transmitting the integrated sensing and communication signal via the first set of multiple transmit beams includes transmitting the integrated sensing and communication signal only in a single cycle of the first set of multiple transmit beams (instead of M×N times as in FIG. 2).

At 504, in response to transmitting the integrated sensing and communication signal, the base station 120 receives a first set of echo signals corresponding to a terminal device 110. In an embodiment, upon receiving the integrated sensing and communication signal, the terminal device 110 may transmit an acknowledgement message to the base station 120. For example, the acknowledgement message may indicate that the integrated sensing and communication signal have been received. Upon receiving the acknowledgement message, the base station 120 identifies echo signals received within a specific time window before and after the acknowledgement message as the set of echo signals corresponding to the terminal device 110. For example, depending on actual needs, the time window size may be set to 10 ms, 20 ms, 50 ms, 100 ms, 200 ms, or the like.

At 506, after receiving the first set of echo signals corresponding to the terminal device 110, the base station 120 estimates a position of the terminal device 110 with a first accuracy based on sensing. Since the first set of transmit beams are relatively wide beams, the first accuracy may be relatively low, so the base station 120 obtains a coarse position of the terminal device 110. The specific operation of estimating the position of the terminal device 110 may be understood with reference to the operation 408. In an embodiment, based on the estimated position of the terminal device 110, the base station 120 may determine, from the first set of multiple transmit beams, a first transmit beam (for example, a beam A1 in FIG. 2) matching the terminal device 110. The base station 120 may further, based on the estimated position of the terminal device 110, determine a first receive beam (for example, a beam B1 in FIG. 2) matching the base station 120 on a side of the terminal device 110.

At 508, the base station 120 sends a first notification to the terminal device 110, so that terminal device 110 can determine a receive beam matching the base station 120. In an embodiment, in a case that the base station 120 has determined the first receive beam matching the base station 120 for the side of the terminal device 110, the base station 120 may indicate the first receive beam in the first notification. In another embodiment, the base station 120 may indicate, in the first notification, the position of the terminal device 110 relative to the base station 120, so that terminal device 110 determines the first receive beam matching the base station 120.

It should be understood that, in the example procedure 500, the integrated sensing and communication signal can be transmitted in at least only a single cycle of the first set of multiple transmit beams, so a paired transmit beam and receive beam between the base station 120 and the terminal device 110 can be obtained based on sensing of the position of the terminal device 110. Compared with the conventional P1 process that requires transmit/receive beam sweeping, for example, for M×N times, the example procedure 500 is more efficient and can achieve equivalent beam sweeping results to the P1 process in a shorter time with lower processing overheads.

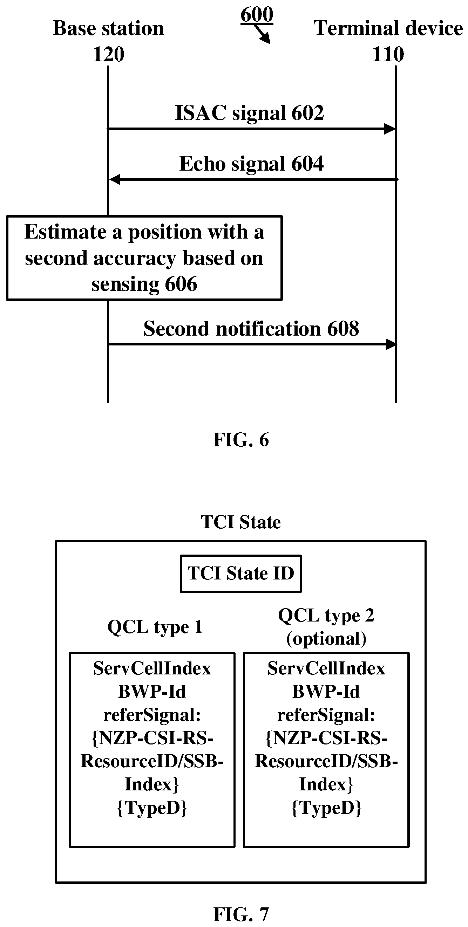

FIG. 6 illustrates another example procedure of beam sweeping and pairing according to an embodiment of the present disclosure. The example procedure 600 may be executed between a base station 120 (or an electronic device 300A) and a terminal device 110 (or an electronic device 300B). For example, the base station 120 may be either of base stations 120A and 120B in FIG. 1, and the terminal device 110 may be any one of terminal devices 110A to 110N in FIG. 1. In an embodiment, the example procedure 600 may be used to implement the P2 and P3 processes of beam sweeping.

As shown in FIG. 6, at 602, the base station 120 transmits an integrated sensing and communication signal via a second set of multiple transmit beams. The second set of multiple transmit beams are relatively narrow beams, for example, similar to a beam A2 in FIG. 2. In an embodiment, the second set of multiple transmit beams are formed by the base station 120 in vicinity of the first transmit beam determined in the example procedure 500. For example, the second set of multiple transmit beams may be formed within the coverage area of the first transmit beam or also in adjacent areas thereof. In an embodiment, transmitting the integrated sensing and communication signal via the second set of multiple transmit beams includes transmitting the integrated sensing and communication signal only in a single cycle of the second set of multiple transmit beams.

At 604, in response to transmitting the integrated sensing and communication signal, the base station 120 receives a second set of echo signals corresponding to the terminal device 110. In an embodiment, upon receiving the integrated sensing and communication signal, the terminal device 110 transmits an acknowledgement message to the base station 120. For example, the acknowledgement message may indicate that the integrated sensing and communication signal have been received. Upon receiving the acknowledgement message, the base station 120 identifies echo signals received within a specific time window before and after the acknowledgement message as the set of echo signals corresponding to the terminal device 110. For example, depending on actual needs, the time window size may be 10 ms, 20 ms, 50 ms, 100 ms, 200 ms, or the like.

At 606, after receiving the second set of echo signals corresponding to the terminal device 110, the base station 120 estimates a position of the terminal device 110 with a second accuracy based on sensing. Since the second set of transmit beams are relatively narrow beams, the second accuracy may be relatively high, so the base station 120 obtains a finer position of the terminal device 110. The specific operation of estimating the finer position of the terminal device 110 may be understood with reference to the operation 408. In an embodiment, the example procedure 600 may be performed after estimating the coarse position of the terminal device 110 in the example procedure 500, so as to re-estimate the finer position of the terminal device 110. In an embodiment, based on the estimated position of the terminal device 110, the base station 120 may determine, from the second set of multiple transmit beams, a second transmit beam matching the terminal device 110 (for example, a beam A2 in FIG. 2). The base station 120 may further, based on the estimated position of the terminal device 110, determine a second receive beam matching the base station 120 on a side of the terminal device 110 (for example, a beam B2 in FIG. 2).

In an embodiment, the terminal device 110 may receive, using the first receive beam matching the base station 120 that is determined in the P1 process (for example, a beam B1 in FIG. 2), and measure the integrated sensing and communication signal transmitted at 602. For example, the integrated sensing and communication signal may be designed to carry a channel state information reference signal (CSI-RS) or a similar reference signal. The terminal device 110 may measure this reference signal and feed back a corresponding measurement report for the second set of multiple transmit beams to the base station 120. It should be noted that, compared with the base station 120 performing sensing based on the echo signals received at 604, the terminal device 110 measuring the reference signal carried in the integrated sensing and communication signal may take longer. Therefore, a narrower transmit beam matched between the side of the base station 120 and terminal device 110 may first be determined based on the echo signals. Thereafter, the base station 120 may verify, based on a measurement report fed back by the terminal device 110, whether the determined transmit beam is the best beam matching the terminal device 110, and adjust the matched beam if necessary. Such operation is efficient, enabling both rapid determining of a matched transmit beam and ensuring that the determined transmit beam is the optimal matched beam.

At 608, the base station 120 sends a second notification to the terminal device 110, so that the terminal device 110 can determine a receive beam matching the base station 120 (for example, a beam B2 in FIG. 2). In an embodiment, in a case that the base station 120 has already determined the second receive beam matching the base station 120 on the side of the terminal device 110, the base station 120 may indicate the second receive beam in the second notification. In another embodiment, the base station 120 may indicate, in the second notification, the position of the terminal device 110 relative to the base station 120, so that terminal device 110 determines the second receive beam matching the base station 120. It should be noted that, since a finer position of the terminal device 110 is estimated at 606, a narrower receive beam matching the base station 120 on the side of the terminal device 110 can be determined correspondingly.

In an embodiment, after determining the receive beam matching the base station 120, the terminal device 110 may additionally measure reference signals from the base station 120 via its multiple receive beams, so as to verify whether the determined matched receive beam is optimal and perform adjustment if necessary. Such operation is efficient, enabling both rapid determining of a matched receive beam and ensuring that the determined receive beam is the optimal matched beam.

It should be understood that, in the example procedure 600, since the integrated sensing and communication signal can be transmitted in at least only a single cycle of the second set of multiple transmit beams, a paired finer transmit beam and receive beam between the base station 120 and the terminal device 110 can be obtained based on sensing on the finer position of the terminal device 110. Compared with the conventional P2 and P3 processes, the example procedure 600 is more efficient and can achieve equivalent beam sweeping results to the P2 and P3 processes in a shorter time with lower processing overheads.

FIG. 7 illustrates an example of transmission configuration indication (TCI) state according to an embodiment of the present disclosure. As shown in FIG. 7, a TCI state is identified by a TCI state ID and may include, for example, one or two quasi-co-location (QCL) types. For example, the structure of the TCI state may be {source reference signal 1|QCL type 1, source reference signal 2|QCL type 2} or {source reference signal 1|QCL type 1}. The source reference signal may include a CSI-RS or an SSB. In embodiments of the present disclosure, at least one of QCL type 1 and QCL type 2 is type D. QCL type D indicates that the target reference signal and the source reference signal (referSignal) in the TCI state have same spatial receive parameter(s). In an embodiment, the first notification or the second notification in the example procedures 500 and 600 may include a TCI state.

In an embodiment, the base station 120 may determine a receive beam of the terminal device 110 based on the estimated position of the terminal device 110, and a reference signal corresponding to the receive beam is the target reference signal. Then, the base station 120 may determine, for example, based on a QCL relationship between reference signals obtained from previous beam sweeping operations during random access, a source reference signal that has a QCL type D relationship with the target reference signal. Accordingly, after receiving the TCI state, the terminal device 110 can determine the source reference signal and corresponding spatial receive parameter(s), and configure an antenna array using the spatial receive parameter(s), so as to perform a reception operation. For example, the terminal device 110 may obtain the spatial receive parameter(s) of the source reference signal based on previous beam sweeping operations.

In an embodiment, the TCI state may be configured via RRC signaling. The TCI state may alternatively be configured via RRC signaling and activated via MAC-CE. The TCI state may further be configured via RRC signaling, activated via MAC-CE, and indicated via DCI.

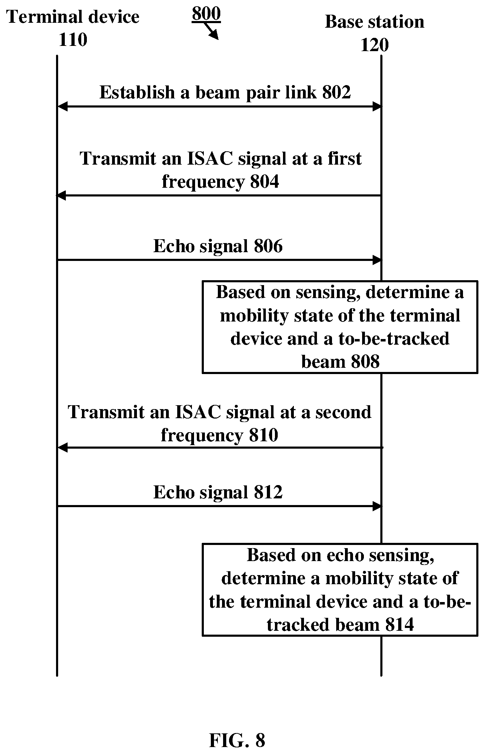

FIG. 8 illustrates an example procedure of beam tracking according to an embodiment of the present disclosure. The example procedure 800 may be executed between a base station 120 (or an electronic device 300A) and a terminal device 110 (or an electronic device 300B). For example, the base station 120 may be any one of base stations 120A and 120B in FIG. 1, and the terminal device 110 may be any one of terminal devices 110A to 110N in FIG. 1.

As shown in FIG. 8, at 802, the base station 120 and the terminal device 110 establish a beam pair link using the paired transmit and receive beams that are determined during beam sweeping. In an embodiment, the paired transmit and receive beams are narrow beams such as a beam A2 and a beam B2 in FIG. 2. It should be understood that, in a case that the beam pair link has been established, the base station 120 and the terminal device 110 need to track performance of other candidate beams, so that a new beam pair link can be quickly established using other beams when the performance of the current narrow beam pair degrades.

At 804, the base station 120 transmits an integrated sensing and communication signal via the established beam pair link at a first transmission frequency. The first transmission frequency may be a relatively low frequency, so that the base station 120 transmits an integrated sensing and communication signal with a period of 50 ms, 100 ms, 200 ms, or 500 ms, for example. At 806, in response to transmitting the integrated sensing and communication signal, the base station 120 receives a set of echo signals corresponding to the terminal device 110.

At 808, based on the set of echo signals, the base station 120 determines a mobility state of the terminal device 110 and a to-be-tracked receive beam of the terminal device 110. In an embodiment, the base station 120A may sense at least one of a distance, a velocity, or an angle of the terminal device 110A relative to the base station 120A based on information about a delay, a doppler frequency, and a phase difference of the set of echo signals. The base station 120A may further estimate a mobility state of the terminal device 110A relative to the base station 120A based on at least one of the distance, the velocity, or the angle of the terminal device 110A relative to the base station 120A. In an embodiment, the to-be-tracked receive beam of the terminal device 110 may be determined based on the mobility state of the terminal device 110.

Based on sensing on the mobility state of the terminal device 110, a change rate of the mobility state of the terminal device 110 can be obtained. In an embodiment, the change rate of the mobility state may relate to the velocity and/or acceleration of the terminal device 110. It should be noted that a higher velocity means a faster position change of the terminal device 110, and a higher acceleration means a more unstable position change of the terminal device 110. Either case may cause a failure in a current beam link between the base station 120 and the terminal device 110. Therefore, beam performance between the base station 120 and the terminal device 110 needs to be tracked more frequently. Correspondingly, in a case that the change rate of the mobility state is lower than a threshold, the position of the terminal device 110 changes relatively slowly. Therefore, the operations 802 to 808 may be repeated to transmit an integrated sensing and communication signal at a lower first frequency and perform beam management. In a case that the change rate of the mobility state is higher than the threshold, the position of the terminal device 110 changes relatively quickly. Therefore, the mobility state and position information of the terminal device 110 need to be updated more frequently and accurately to keep tracking the receive beam of the terminal device 110.

At 810, in response to determining that the change rate of the mobility state of the terminal device 110 is higher than the threshold, the base station 120 transmits an integrated sensing and communication signal at a second transmission frequency. The second transmission frequency is higher than the first transmission frequency, so that the base station 120 transmits an integrated sensing and communication signal with a period of 20 ms, 40 ms, 60 ms, or 80 ms, for example. At 812, in response to transmitting the integrated sensing and communication signal, the base station 120 receives a set of echo signals corresponding to the terminal device 110. Due to the higher transmission frequency of the integrated sensing and communication signal, the base station 120 can collect the set of echo signals in a shorter time. At 814, based on the set of echo signals, the base station 120 can rapidly determine a mobility state of the terminal device 110 and a to-be-tracked receive beam of the terminal device 110. Thereafter, based on a relationship between the change rate of the mobility state of the terminal device 110 and the threshold, the first frequency or the second frequency may be selected for transmitting the integrated sensing and communication signal.

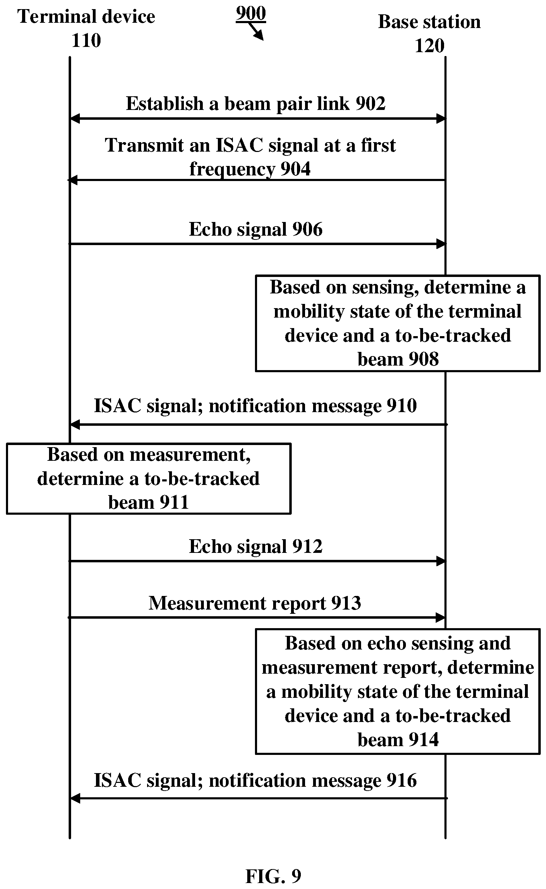

FIG. 9 illustrates another example procedure of beam tracking according to an embodiment of the present disclosure. An example procedure 900 may be executed between a base station 120 (or an electronic device 300A) and a terminal device 110 (or an electronic device 300B). For example, the base station 120 may be either of base stations 120A and 120B in FIG. 1, and the terminal device 110 may be any one of terminal devices 110A to 110N in FIG. 1. Compared with the example procedure 800, in a case that the change rate of the mobility state of the terminal device 110 is higher than the threshold, the example procedure 900 can update the mobility state and position information of the terminal device 110 more accurately based on a measurement report from the terminal device 110.

Operations 902 to 908 may be understood with reference to operations 802 to 808 in FIG. 8. As shown in FIG. 9, at 910, in response to determining that the change rate of the mobility state of the terminal device 110 is higher than the threshold, the base station 120 transmits an integrated sensing and communication signal and a notification message to the terminal device 110. Upon receiving the notification message, at 911, the terminal device 110 may initiate sensing measurement on the integrated sensing and communication signal transmitted by the base station 120 and then feed back a sensing measurement result to the base station 120.

In an embodiment, sensing measurement performed by the terminal device 110 on the integrated sensing and communication signal includes multipath measurements on the sensing signal. Multipath parameter estimation is mainly estimating M dominant multipath components for each transmit beam that are received by the terminal device, including a time delay $\tau_j$, a Doppler shift $f_j$, a channel path coefficient $p_j$, and an angle of arrival, including an elevation angle $\partial_j$ and an azimuth angle $\emptyset_j$. The parameters are combined into one vector denoted as $V_j$. Assuming that a transmit signal on the m-th beam is $s_{m(t)}$, a receive signal may be expressed as:

$$Y_{(m)}(t) = \sum_{j=1}^{J(m)} X_{j,(m)}\big(t : V_{(j)}\big),$$

where $X_{j,(m)}(t : V_{(j)})$ is a transmit signal of the j-th path. The spatial generalized alternating algorithm is employed to perform iterative optimization estimation by alternately optimizing the delay, Doppler, signal coefficient, and angle of arrival components on the estimated parameters of each path. For example, space alternating generalized expectation (SAGE) maximization can be adopted to reduce computational complexity. Through alternating optimization of the estimated parameters for each path, the convergence speed of the maximization step is enhanced.

At 912, in response to transmitting the integrated sensing and communication signal, the base station 120 receives a set of echo signals corresponding to the terminal device 110. At 913, the base station 120 receives a measurement report from the terminal device 110. At 914, on one hand, based on the set of echo signals, the base station 120 can determine a mobility state of the terminal device 110 and a to-be-tracked receive beam of the terminal device 110. On the other hand, the base station further determines a mobility state of the terminal device 110 and a to-be-tracked receive beam of the terminal device 110 based on the measurement report. In an embodiment, the base station 120 may cross-validate results obtained based on the set of echo signals and the sensing measurement report, thereby improving accuracy of beam tracking.

If it is determined at 914 that the change rate of the mobility state of the terminal device 120 is still higher than the threshold, the terminal device 120 continues feeding back a sensing measurement result to the base station 110. Otherwise, at 916, in response to determining that the change rate of the mobility state of the terminal device 110 is lower than the threshold, the base station 120 transmits an integrated sensing and communication signal and a notification message to the terminal device 110, so that the terminal device 110 stops sensing measurement on the integrated sensing and communication signal transmitted by the base station 120.

It should be noted that, in the example procedure 900, the frequency of transmitting the integrated sensing and communication signal by the base station 120 at operation 910 may be increased, so that the set of echo signals can be collected within a shorter time. In such embodiments, the mobility state and position information of the terminal device 110 can be updated more accurately and quickly, thereby enabling more accurate and faster beam tracking.

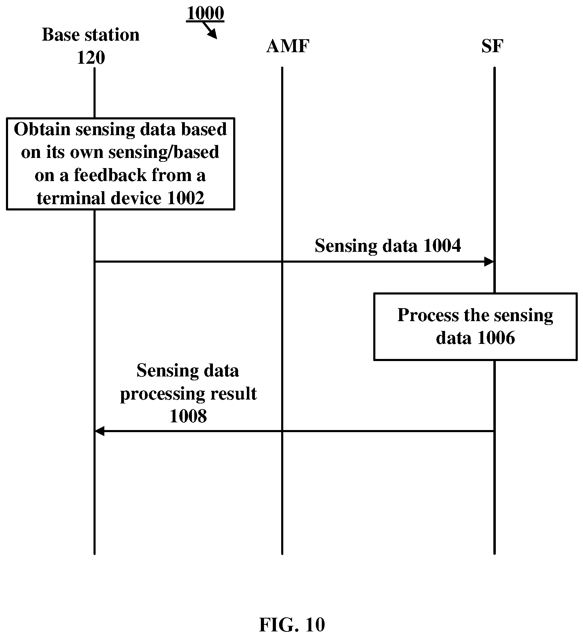

FIG. 10 illustrates still another example procedure of beam tracking according to an embodiment of the present disclosure. The example procedure 1000 may be executed between a base station 120 (or an electronic device 300A), a terminal device 110 (or an electronic device 300B), an access and mobility management function (AMF) entity, and a sensing function (SF) entity. For example, the base station 120 may be any one of base stations 120A and 120B in FIG. 1, and the terminal device 110 may be any one of terminal devices 110A to 110N in FIG. 1.

In the example procedures 800 and 900, the base station 120 processes sensing data, so as to perform beam tracking. The sensing data may include data obtained through sensing by the base station 120 and data sensed and reported by the terminal device 110. In the example procedure 1000, a network function entity may be used to assist the base station 120 in processing sensing data.

As shown in FIG. 10, at 1002, the base station 120 obtains sensing data based on its own sensing or based on a feedback from the terminal device 110. At 1004, the base station 110 provides the sensing data to the SF entity via the AMF entity. At 1006, the SF entity processes the sensing data. In an embodiment, the SF entity may sense at least one of a distance, a velocity, or an angle of the terminal device 110 A relative to the base station 120A based on information about a delay, a doppler frequency, and a phase difference of the set of echo signals. The SF entity may further estimate the position of the terminal device 110A relative to the base station 120A based on at least one of the distance, the velocity, or the angle of the terminal device 110A relative to the base station 120A. At 1008, the SF entity provides a sensing data processing result to the base station 120 via the AMF entity. It should be understood that the SF is only an example of a network element for sensing. In different implementations, the SF may be implemented as a standalone entity or co-located with other entities.

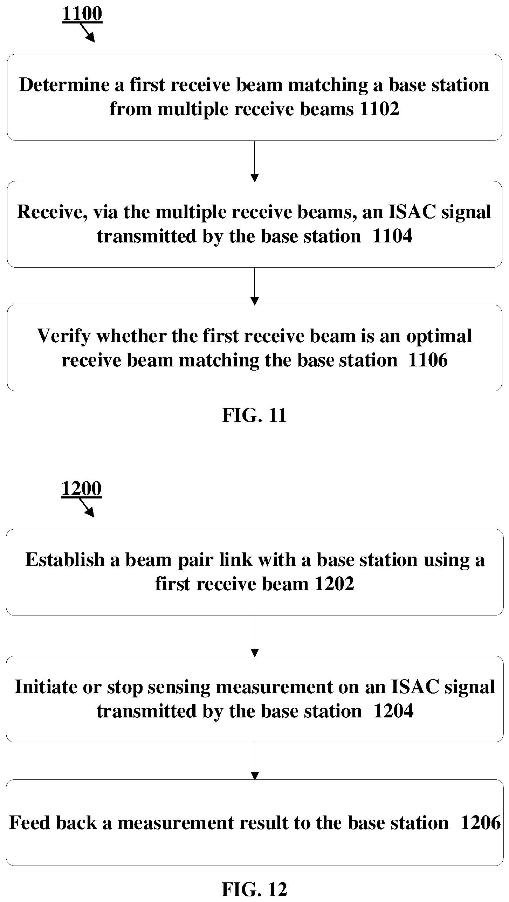

FIG. 11 illustrates a first example method for communication according to an embodiment of the present disclosure. The method may be performed by a terminal device (for example, any one of 110A to 110N) or an electronic device 300B. As shown in FIG. 11, the method 1100 may include: determining a first receive beam (for example, a beam B2) matching a base station from multiple receive beams based on a notification received from the base station (for example, the notification at 608) (block 1102). The method may include: receiving, via the multiple receive beams, an integrated sensing and communication signal transmitted by the base station via a transmit beam (block 1104). The method may further include: verifying whether the first receive beam (for example, the beam B2) is an optimal receive beam matching the base station, based on a measurement on the integrated sensing and communication signal (block 1106). Further details of the method may be understood with reference to the above description related to the terminal device or the electronic device 300B.

FIG. 12 illustrates a second example method for communication according to an embodiment of the present disclosure. The method may be performed by a terminal device (for example, any one of 110A to 110N) or an electronic device 300B. As shown in FIG. 12, the method 1200 may include: establishing a beam pair link with a base station using a first receive beam (for example, a beam B2) (block 1202). The method may include: initiating or stopping sensing measurement on an integrated sensing and communication signal transmitted by the base station, based on a notification received from the base station (for example, the notifications at 910 and 916) (block 1204). The method may further include: feeding back a measurement result to the base station (block 1206). Further details of the method may be understood with reference to the above description related to the terminal device or electronic device 300B.

Various example electronic devices and methods according to the embodiments of the present disclosure have been described above. It should be understood that the operations or functions of these electronic devices may be combined with each other to implement more or less operations or functions than described. The operational steps of the methods can also be combined with each other in any suitable order, so that similarly more or fewer operations are implemented than described.

It should be understood that the machine-executable instructions in the machine-readable storage medium or program product according to the embodiments of the present disclosure can be configured to perform operations corresponding to the device and method embodiments described above. When referring to the above device and method embodiments, the embodiments of the machine-readable storage medium or the program product are clear to those skilled in the art, and therefore description thereof will not be repeated herein. A machine-readable storage media and a program product for carrying or including the above-described machine-executable instructions also fall within the scope of the present disclosure. Such storage medium can include, but is not limited to, a floppy disk, an optical disk, a magneto-optical disk, a memory card, a memory stick, and the like. In addition, it should be understood that the above series of processing and devices may alternatively be implemented by software and/or firmware.

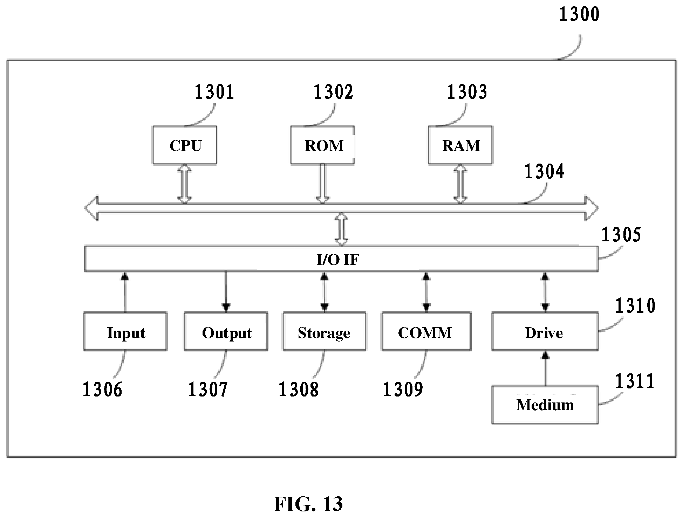

In addition, it should be understood that the above series of processing and devices may alternatively be implemented by software and/or firmware. In the case of implementation by software and/or firmware, a program constituting the software is installed from a storage medium or a network to a computer having a dedicated hardware configuration, such as a general-purpose computer 1300 shown in FIG. 13. When various programs are installed, the computer is capable of performing various functions and so on. FIG. 13 is an example block diagram of a computer configured to be implemented as a terminal device or a base station according to an embodiment of the present disclosure.

In FIG. 13, a central processing unit (CPU) 1301 executes various processing based on a program stored in a read-only memory (ROM) 1302 or a program loaded from a storage portion 1308 to a random access memory (RAM) 1303. The RAM 1303 also stores data required for executing various processing and the like by the CPU 1301 when necessary.

The CPU 1301, the ROM 1302, and the RAM 1303 are connected with each other via a bus 1304. An input/output port 1305 is also connected to the bus 1304.

The following components are connected to the input/output port 1305: an input part 1306, including a keyboard, a mouse, and the like; an output part 1307, including a display such as a cathode-ray tube (CRT) and a liquid crystal display (LCD), a speaker, and the like; a storage part 1308, including a hard disk and the like; and a communication part 1309, including a network interface card such as a LAN card or a modem. The communication part 1309 performs communication processing via a network such as the Internet.

Based on needs, a drive 1310 is also connected to the input/output port 1305. A removable medium 1311 such as a magnetic disk, an optical disc, a magneto-optical disk, a semiconductor memory, or the like is mounted on the drive 1310 when necessary, so that a computer program read therefrom is installed in the storage part 1308 when necessary.

In a case that the foregoing series of processing are implemented by software, programs constituting the software are installed from a network such as the Internet or a storage medium such as the removable medium 1311.

Those skilled in the art should understand that such a storage medium is not limited to the removable medium 1311 shown in FIG. 13, in which the program is stored and distributed independent from a device to provide the program for users. For example, the removable medium 1311 includes a magnetic disk (including a floppy disk (registered trademark)), an optical disc (including a compact disk read-only memory (CD-ROM) and a digital versatile disk (DVD)), a magneto-optical disc (including a mini disk (MD)(registered trademark)), and a semiconductor memory. Alternatively, the storage medium may be the ROM 1302, a hard disk included in the storage part 1308, or the like, in which the program is stored, and may be distributed to users along with a device including the storage medium.

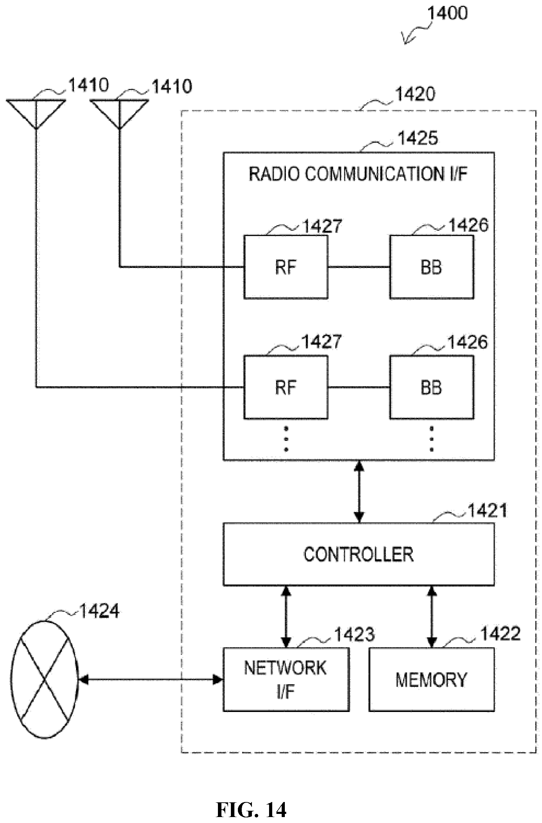

Use cases according to the present disclosure will be described below with reference to FIG. 14 to FIG. 17.

Use cases for the base station

First use case

FIG. 14 is a block diagram illustrating a first example of a schematic configuration of a gNB to implement the technology of the present disclosure. The gNB 1400 includes a plurality of antennas 1410 and a base station device 1420. The base station device 1420 and each antenna 1410 may be connected to each other via an RF cable. In one implementation, the gNB 1400 (or base station device 1420) herein may correspond to the electronic device 300A described above.

Each of the antennas 1410 includes a single or multiple antenna elements (such as multiple antenna elements included in a multiple input and multiple output (MIMO) antenna), and is used for the base station device 1420 to transmit and receive radio signals. As shown in FIG. 14, the gNB 1400 may include multiple antennas 1410. For example, multiple antennas 1410 may be compatible with multiple frequency bands used by the gNB 1400.

The base station device 1420 includes a controller 1421, a memory 1422, a network interface 1423, and a radio communication interface 1425.

The controller 1421 may be, for example, a CPU or a DSP, and operates various functions of higher layers of the base station device 1420. For example, controller 1421 generates data packets from data in signals processed by the radio communication interface 1425, and transmits the generated packets via the network interface 1423. The controller 1421 can bundle data from multiple baseband processors to generate the bundled packets, and transmit the generated bundled packets. The controller 1421 may have logic functions of performing control such as radio resource control, radio bearer control, mobility management, admission control, and scheduling. This control may be performed in corporation with a gNB or a core network node in the vicinity. The memory 1422 includes a RAM and a ROM, and stores a program that is executed by the controller 1421 and various types of control data (such as a terminal list, transmission power data, and scheduling data).

The network interface 1423 is a communication interface for connecting the base station device 1420 to the core network 1424. The controller 1421 may communicate with a core network node or another gNB via the network interface 1423. In this case, the gNB 1400 and the core network node or other gNBs may be connected to each other through a logical interface (such as an S1 interface and an X2 interface). The network interface 1423 may also be a wired communication interface or a radio communication interface for radio backhaul lines. If the network interface 1423 is a radio communication interface, the network interface 1423 may use a higher frequency band for radio communication than a frequency band used by the radio communication interface 1425.

The radio communication interface 1425 supports any cellular communication schemes (such as Long Term Evolution (LTE) and LTE-Advanced), and provides, via the antenna 1410, radio connection to a terminal located in a cell of the gNB 1400. The radio communication interface 1425 may typically include, for example, a baseband (BB) processor 1426 and a RF circuit 1427. The BB processor 1426 may perform, for example, encoding/decoding, modulation/demodulation, and multiplexing/demultiplexing, and performs various types of signal processing of layers (such as L1, Medium Access Control (MAC), Radio Link Control (RLC), and Packet Data Convergence Protocol (PDCP)). Instead of the controller 1421, the BB processor 1426 may have a part or all of the above-described logic functions. The BB processor 1426 may be a memory that stores a communication control program, or a module that includes a processor configured to execute the program and a related circuit. Updating the program may allow the functions of the BB processor 1426 to be changed. The module may be a card or a blade that is inserted into a slot of the base station device 1420. Alternatively, the module may also be a chip that is mounted on the card or the blade. Meanwhile, the RF circuit 1427 may include, for example, a mixer, a filter, and an amplifier, and transmits and receives radio signals via the antenna 1410. Although FIG. 14 illustrates the example in which one RF circuit 1427 is connected to one antenna 1410, the present disclosure is not limited to thereto; rather, one RF circuit 1427 may connect to a plurality of antennas 1410 at the same time.

As illustrated in FIG. 14, the radio communication interface 1425 may include the multiple BB processors 1426. For example, the multiple BB processors 1426 may be compatible with multiple frequency bands used by gNB 1400. As illustrated in FIG. 14, the radio communication interface 1425 may include the multiple RF circuits 1427. For example, the multiple RF circuits 1427 may be compatible with multiple antenna elements. Although FIG. 14 illustrates the example in which the radio communication interface 1425 includes the multiple BB processors 1426 and the multiple RF circuits 1427, the radio communication interface 1425 may also include a single BB processor 1426 or a single RF circuit 1427.

Second use case

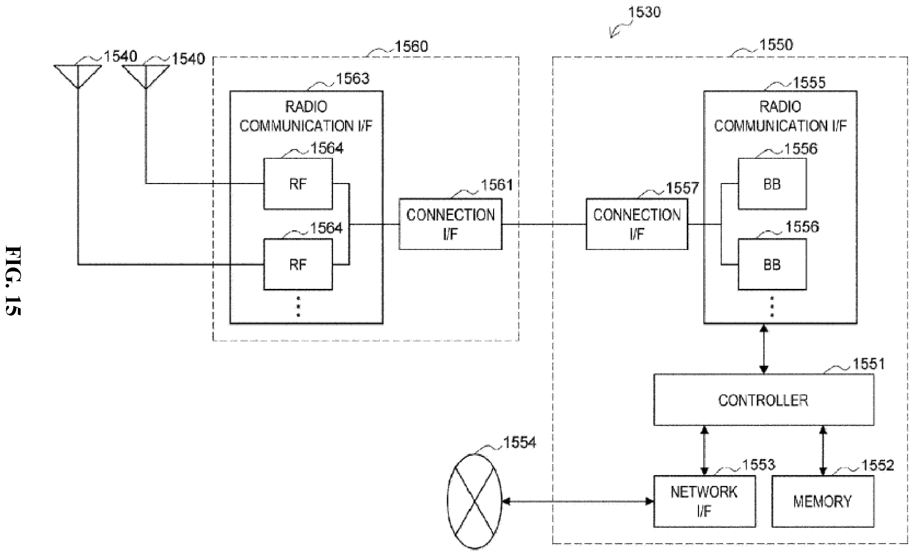

FIG. 15 is a block diagram illustrating a second example of a schematic configuration of a gNB to implement the technology of the present disclosure. The gNB 1530 includes a plurality of antennas 1540, a base station device 1550, and an RRH 1560. The RRH 1560 and each antenna 1540 may be connected to each other via an RF cable. The base station device 1550 and the RRH 1560 may be connected to each other via a high speed line such as a fiber optic cable. In one implementation, the gNB 1530 (or base station device 1550) herein may correspond to the electronic device 300A described above.

Each of the antennas 1540 includes a single or multiple antenna elements such as multiple antenna elements included in a MIMO antenna and is used for the RRH 1560 to transmit and receive radio signals. As shown in FIG. 15, the gNB 1530 may include multiple antennas 1540. For example, multiple antennas 1540 may be compatible with multiple frequency bands used by the gNB 1530.

The base station device 1550 includes a controller 1551, a memory 1552, a network interface 1553, a radio communication interface 1555, and a connection interface 1557. The controller 1551, the memory 1552, and the network interface 1553 are the same as the controller 1421, the memory 1422, and the network interface 1423 described with reference to FIG. 14.

The radio communication interface 1555 supports any cellular communication scheme (such as LTE and LTE-Advanced) and provides radio communication to terminal devices positioned in a sector corresponding to the RRH 1560 via the RRH 1560 and the antenna 1540. The radio communication interface 1555 may typically include, for example, a BB processor 1556. The BB processor 1556 is the same as the BB processor 1426 described with reference to FIG. 14, except that the BB processor 1556 is connected to the RF circuit 1564 of the RRH 1560 via the connection interface 1557. As illustrated in FIG. 15, the radio communication interface 1555 may include the multiple BB processors 1556. For example, the multiple BB processors 1556 may be compatible with multiple frequency bands used by gNB 1530. Although FIG. 15 illustrates the example in which the radio communication interface 1555 includes multiple BB processors 1556, the radio communication interface 1555 may also include a single BB processor 1556.

The connection interface 1557 is an interface for connecting the base station device 1550 (radio communication interface 1555) to the RRH 1560. The connection interface 1557 may also be a communication module for communication in the above-described high speed line that connects the base station device 1550 (radio communication interface 1555) to the RRH 1560.

The RRH 1560 includes a connection interface 1561 and a radio communication interface 1563.

The connection interface 1561 is an interface for connecting the RRH 1560 (radio communication interface 1563) to the base station device 1550. The connection interface 1561 may also be a communication module for communication in the above-described high speed line.

The radio communication interface 1563 transmits and receives radio signals via the antenna 1540. The radio communication interface 1563 may typically include, for example, the RF circuitry 1564. The RF circuit 1564 may include, for example, a mixer, a filter, and an amplifier, and transmits and receives radio signals via the antenna 1540. Although FIG. 15 illustrates the example in which one RF circuit 1564 is connected to one antenna 1540, the present disclosure is not limited to thereto; rather, one RF circuit 1564 may connect to a plurality of antennas 1540 at the same time.

As illustrated in FIG. 15, the radio communication interface 1563 may include the multiple RF circuits 1564. For example, the multiple RF circuits 1564 may support multiple antenna elements. Although FIG. 15 illustrates the example in which the radio communication interface 1563 includes the multiple RF circuits 1564, the radio communication interface 1563 may also include a single RF circuit 1564.

Use cases for the terminal device

First use case

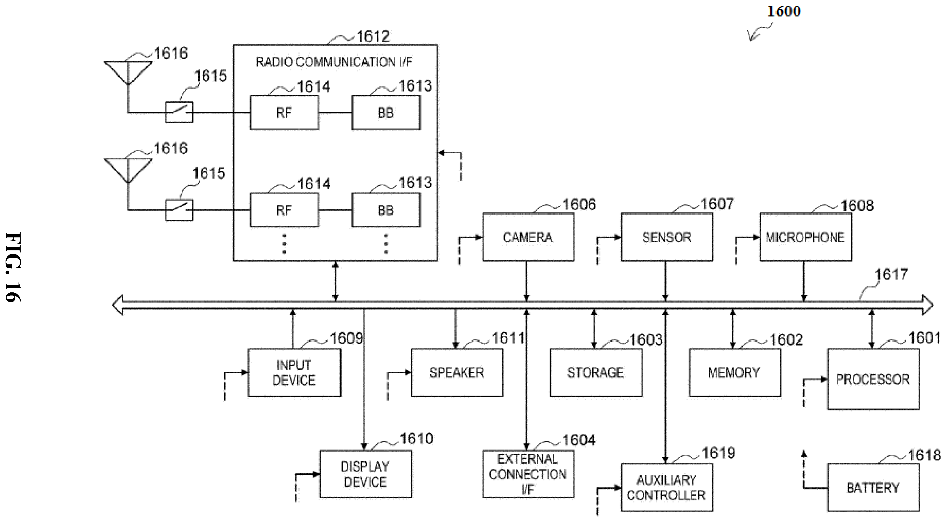

FIG. 16 is a block diagram illustrating an example of a schematic configuration of an smartphone 1600 to implement the technology of the present disclosure. A smartphone 1600 includes a processor 1601, a memory 1602, a storage device 1603, an external connection interface 1604, a camera device 1606, a sensor 1607, a microphone 1608, an input device 1609, a display device 1610, a speaker 1611, a radio communication interface 1612, one or more antenna switches 1615, one or more antennas 1616, a bus 1617, a battery 1618, and an auxiliary controller 1619. In an implementation, the smartphone 1600 (or the processor 1601) herein may correspond to the electronic device 300B described above.

The processor 1601 may be, for example, a CPU or a system on a chip (SoC), and controls functions of the application layer and other layers of the smartphone 1600. The memory 1602 includes a RAM and a ROM, and stores a program that is executed by the processor 1601. The storage device 1603 may include a storage medium such as a semiconductor memory and a hard disk. The external connection interface 1604 is an interface for connecting an external device (for example, a memory card and a universal serial bus (USB) device) to the smartphone 1600.

The camera device 1606 includes an image sensor (for example, a charge coupled device (CCD) and a complementary metal oxide semiconductor (CMOS)), and generates a captured image. The sensor 1607 may include a set of sensors, such as a measurement sensor, a gyro sensor, a geomagnetic sensor, and an acceleration sensor. The microphone 1608 converts the sound input of the smart phone 1600 into an audio signal. The input device 1609 includes, for example, a touch sensor configured to detect touches on the screen of the display device 1610, a keypad, a keyboard, buttons, or switches, and receives input operations or information of a user. The display device 1610 includes a screen (for example, a liquid crystal display (LCD) and an organic light emitting diode (OLED) display), and displays output images of the smartphone 1600. The speaker 1611 converts output audio signals of the smartphone 1600 into sound.

The radio communication interface 1612 supports any cellular communication scheme (such as LTE, LTE-Advanced, and NR) and performs radio communication. The radio communication interface 1612 may typically include, for example, a BB processor 1613 and an RF circuit 1614. The BB processor 1613 may perform, for example, encoding/decoding, modulation/demodulation, and multiplexing/demultiplexing, and performs various types of signal processing for radio communication. Meanwhile, the RF circuit 1614 may include, for example, a mixer, a filter, and an amplifier, and transmits and receives radio signals via the antenna 1616. The radio communication interface 1612 may be a chip module on which the BB processor 1613 and the RF circuit 1614 are integrated. As shown in FIG. 16, the radio communication interface 1612 may include multiple BB processors 1613 and multiple RF circuits 1614. Although FIG. 16 illustrates the example in which the radio communication interface 1612 includes the multiple BB processors 1613 and the multiple RF circuits 1614, the radio communication interface 1612 may also include a single BB processor 1613 or a single RF circuit 1614.

In addition to a cellular communication scheme, the radio communication interface 1612 can support other types of radio communication schemes, such as a short-range wireless communication scheme, a near-field communication scheme, and a wireless local area network (LAN) scheme. In this case, the radio communication interface 1612 may include the BB processor 1613 and the RF circuit 1614 as to each radio communication scheme.

Each of the antenna switches 1615 switches the connection destination of the antenna 1616 among multiple circuits (for example, circuits for different radio communication schemes) included in the radio communication interface 1612.

Each of the antennas 1616 includes one or more antenna elements (such as multiple antenna elements included in a MIMO antenna), and is used for the radio communication interface 1612 to transmit and receive radio signals. As shown in FIG. 16, the smartphone 1600 may include multiple antennas 1616. Although FIG. 16 illustrates an example in which the smartphone 1600 includes multiple antennas 1616, the radio communication interface 1600 may alternatively include a single antenna 1616.

In addition, the smartphone 1600 may include the antennas 1616 for every radio communication scheme. In this case, the antenna switch 1615 can be removed from configuration of the smartphone 1600.

The bus 1617 connects the processor 1601, the memory 1602, the storage device 1603, the external connection interface 1604, the camera device 1606, the sensor 1607, the microphone 1608, the input device 1609, the display device 1610, the speaker 1611, the radio communication interface 1612, and the auxiliary controller 1619. The battery 1618 provides power for various blocks of the smartphone 1600 illustrated in FIG. 16 via feeders, and the feeders are partially expressed as dashed lines in the figure. The auxiliary controller 1619, for example, operates the minimum necessary functions of the smartphone 1600 in sleep mode.

Second use case

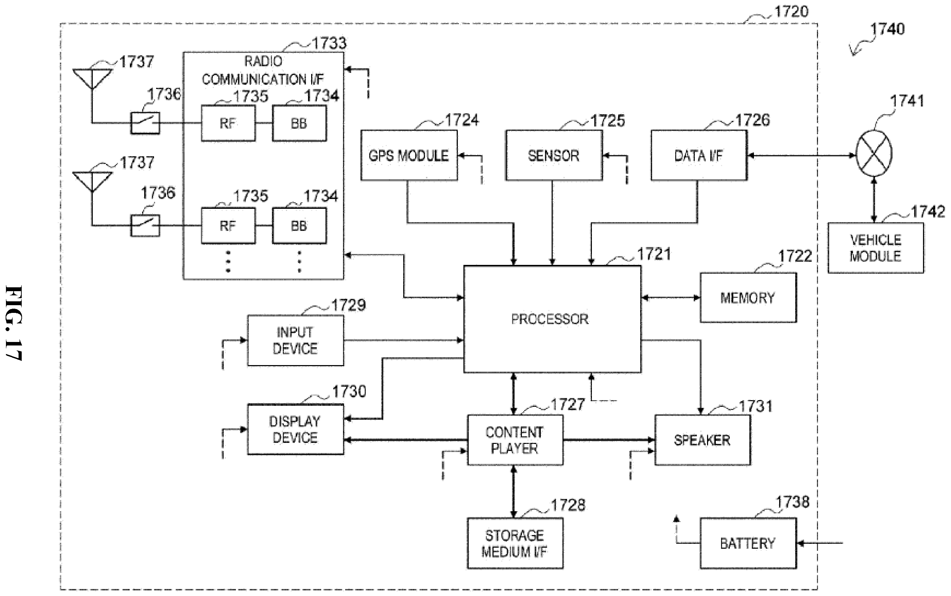

FIG. 17 is a block diagram illustrating an example of a schematic configuration of a car navigation device 1720 to implement the technology of the present disclosure. The car navigation device 1720 includes a processor 1721, a memory 1722, a global positioning system (GPS) 1724, a sensor 1725, a data interface 1726, a content player 1727, a storage medium interface 1728, an input device 1729, a display device 1730, a speaker 1731, a radio communication interface 1733, one or more antenna switches 1736, one or more antennas 1737, and a battery 1738. In an implementation, the car navigation device 1720 (or the processor 1721) herein may correspond to the electronic device 300B described above.

The processor 1721 may be, for example, a CPU or a SoC, and controls the navigation function and other functions of the car navigation device 1720. The memory 1722 includes a RAM and a ROM, and stores a program that is executed by the processor 1721.

The GPS module 1724 performs measurement on a location (such as a latitude, a longitude, and an altitude) of the car navigation device 1720 by using GPS signals received from GPS satellites. The sensor 1725 may include a set of sensors, such as a gyro sensor, a geomagnetic sensor, and an air pressure sensor. The data interface 1726 is connected to, for example, an in-vehicle network 1741 via a terminal not shown, and acquires data generated by the vehicle (such as vehicle speed data).

The content player 1727 plays back content stored in a storage medium (such as a CD and a DVD), which is inserted into the storage medium interface 1728. The input device 1729 includes, for example, a touch sensor configured to detect touches on the screen of the display device 1730, buttons, or switches, and receives input operations or information of a user. The display device 1730 includes a screen, for example, an LCD or OLED screen, and displays images for the navigation function or playback content. The speaker 1731 outputs the sound for the navigation function or playback content.

The radio communication interface 1733 supports any cellular communication scheme (such as LTE, LTE-Advanced, and NR) and performs radio communication. The radio communication interface 1733 may typically include, for example, a BB processor 1734 and an RF circuit 1735. The BB processor 1734 may perform, for example, encoding/decoding, modulation/demodulation, and multiplexing/demultiplexing, and performs various types of signal processing for radio communication. Meanwhile, the RF circuit 1735 may include, for example, a mixer, a filter, and an amplifier, and transmits and receives radio signals via the antenna 1737. The radio communication interface 1733 may alternatively be a chip module on which the BB processor 1734 and the RF circuit 1735 are integrated. As shown in FIG. 17, the radio communication interface 1733 may include multiple BB processors 1734 and multiple RF circuits 1735. Although FIG. 17 illustrates the example in which the radio communication interface 1733 includes the multiple BB processors 1734 and the multiple RF circuits 1735, the radio communication interface 1733 may also include a single BB processor 1734 or a single RF circuit 1735.

In addition to a cellular communication scheme, the radio communication interface 1733 can support other types of radio communication schemes, such as a short-range wireless communication scheme, a near-field communication scheme, and a wireless LAN scheme. In this case, the radio communication interface 1733 may include the BB processor 1734 and the RF circuit 1735 as to each radio communication scheme.

Each of the antenna switches 1736 switches the connection destination of the antenna 1737 among multiple circuits (for example, circuits for different radio communication schemes) included in the radio communication interface 1733.

Each of the antennas 1737 includes one or more antenna elements (such as multiple antenna elements included in a MIMO antenna), and is used for the radio communication interface 1733 to transmit and receive radio signals. As shown in FIG. 17, the car navigation device 1720 may include multiple antennas 1737. Although FIG. 17 illustrates an example in which the car navigation device 1720 includes multiple antennas 1737, the car navigation device 1720 may alternatively include a single antenna 1737.

In addition, the car navigation device 1720 may include the antenna 1737 for every radio communication scheme. In this case, the antenna switch 1736 can be removed from configuration of the car navigation device 1720.

The battery 1738 provides power for various blocks of the car navigation device 1720 illustrated inFIG. 17 via feeders, and the feeders are partially expressed as dashed lines in the figure. The battery 1738 accumulates power supplied by the vehicle.

The technology of the present disclosure may also be implemented as an in-vehicle system (or vehicle) 1740 including one or more blocks of the car navigation device 1720, the in-vehicle network 1741, and a vehicle module 1742. The vehicle module 1742 generates vehicle data (such as vehicle speed, engine speed, and failure information), and outputs the generated data to the in-vehicle network 1741.

It should be understood that the following example implementations may be used to implement the technical solutions of the present disclosure.

1. An electronic device for a base station, the electronic device including processing circuitry configured to:

transmit an integrated sensing and communication signal via a first set of multiple transmit beams;

in response to transmitting the integrated sensing and communication signal, receive a first set of echo signals corresponding to a terminal device;

estimate a position of the terminal device based on the first set of echo signals; and

send a first notification to the terminal device, so that the terminal device can determine a first receive beam matching the base station.

2. The electronic device according to clause 1, where transmitting the integrated sensing and communication signal via the first set of multiple transmit beams includes transmitting the integrated sensing and communication signal only in a single cycle of the first set of multiple transmit beams.

3. The electronic device according to clause 1, where estimating the position of the terminal device includes:

sensing at least one of a distance, a velocity, or an angle of the terminal device relative to the base station based on information about a delay, a doppler frequency, and a phase difference of the first set of echo signals; and

estimating the position of the terminal device relative to the base station based on at least one of the distance, the velocity, or the angle of the terminal device relative to the base station.

4. The electronic device according to clause 1,

where the processing circuitry is further configured to: determine a first receive beam matching the base station on a side of the terminal device based on the estimated position of the terminal device,

where sending the first notification to the terminal device includes indicating the determined first receive beam in the first notification.

5. The electronic device according to clause 1, where sending the first notification to the terminal device includes indicating a position of the terminal device relative to the base station in the first notification so as to facilitate the terminal device to determine a first receive beam matching the base station.

6. The electronic device according to clause 1, where the processing circuitry is further configured to:

determine a first transmit beam matching the terminal device from the first set of multiple transmit beams based on the estimated position of the terminal device;

transmit an integrated sensing and communication signal via a second set of multiple transmit beams near the first transmit beam;

in response to transmitting the integrated sensing and communication signal via the second set of multiple transmit beams, receive a second set of echo signals corresponding to the terminal device;

re-estimate the position of the terminal device with higher accuracy based on the second set of echo signals; and

determine a second transmit beam matching the terminal device from the second set of multiple transmit beams based on the re-estimated position.

7. The electronic device according to clause 6, where the processing circuitry is further configured to:

in response to transmitting the integrated sensing and communication signal via the second set of multiple transmit beams, receive a measurement report from the terminal device for the second set of multiple transmit beams; and

verify whether the second transmit beam is an optimal transmit beam matching the terminal device based further on the measurement report.

8. The electronic device according to clause 6, where the processing circuitry is further configured to: send a second notification to the terminal device to enable the terminal device to determine a second receive beam matching the base station.

9. The electronic device according to clause 8, where the processing circuitry is further configured to: determine a second receive beam matching the base station on a side of the terminal device based on the re-estimated position, where sending the second notification to the terminal device includes indicating the determined second receive beam in the second notification; or where sending the second notification to the terminal device includes indicating a re-estimated position of the terminal device relative to the base station in the second notification so as to facilitate the terminal device to determine a second receive beam matching the base station.

10. The electronic device according to clause 4 or 9, where the first notification or the second notification includes a transmission configuration indication (TCI) state, and a quasi-co-location type of the TCI state is type D.

11. An electronic device for a base station, the electronic device including processing circuitry configured to:

establish a beam pair link with a terminal device using a first transmit beam, and transmit an integrated sensing and communication signal via the first transmit beam at a first transmission frequency;

in response to transmitting the integrated sensing and communication signal, receive a first set of echo signals corresponding to the terminal device;

obtain a mobility state of the terminal device based on the first set of echo signals; and

determine a to-be-tracked receive beam of the terminal device based on the mobility state of the terminal device.

12. The electronic device according to clause 11, where the processing circuitry is further configured to: in response to determining that a change rate of the mobility state of the terminal device is above a threshold level, perform at least one of the following:

transmitting the integrated sensing and communication signal via the first transmit beam at a second transmission frequency that is higher than the first transmission frequency; or

notifying the terminal device to perform sensing measurement on the integrated sensing and communication signal and feed back a measurement result.

13. The electronic device according to clause 12, where the processing circuitry is further configured to: determine the to-be-tracked receive beam of the terminal device based on both the mobility state of the terminal device and the measurement result from the terminal device.

14. An electronic device for a terminal device, the electronic device including processing circuitry configured to:

determine a first receive beam matching a base station from a first set of multiple receive beams based on a notification received from the base station;

receive, via the first set of multiple receive beams, an integrated sensing and communication signal transmitted by the base station via a transmit beam; and

verify whether the first receive beam is an optimal receive beam matching the base station, based on a measurement on the integrated sensing and communication signal.

15. The electronic device according to clause 14, where the first notification includes a transmission configuration indication (TCI) state, and a quasi-co-location type of the TCI state is type D.

16. An electronic device for a terminal device, the electronic device including processing circuitry configured to:

establish a beam pair link with a base station using a first receive beam;

initiate or stop sensing measurement on an integrated sensing and communication signal transmitted by the base station, based on a notification received from the base station; and

feed back a measurement result to the base station.

17. A method for a base station, including:

transmitting an integrated sensing and communication signal via a first set of multiple transmit beams;

in response to transmitting the integrated sensing and communication signal, receiving a first set of echo signals corresponding to a terminal device;

estimating a position of the terminal device based on the first set of echo signals; and

sending a first notification to the terminal device, so that the terminal device can determine a first receive beam matching the base station.

18. A method for a base station, including:

establishing a beam pair link with a terminal device using a first transmit beam, and transmitting an integrated sensing and communication signal via the first transmit beam at a first transmission frequency;

in response to transmitting the integrated sensing and communication signal, receiving a first set of echo signals corresponding to the terminal device;

obtaining a mobility state of the terminal device based on the first set of echo signals; and

determining a to-be-tracked receive beam of the terminal device based on the mobility state of the terminal device.

19. A method for a terminal device, including:

determining a first receive beam matching a base station from multiple receive beams based on a notification received from the base station;

receiving, via the multiple receive beams, an integrated sensing and communication signal transmitted by the base station via a transmit beam; and

verifying whether the first receive beam is an optimal receive beam matching the base station, based on a measurement on the integrated sensing and communication signal.

20. A method for a terminal device, including:

establishing a beam pair link with a base station using a first receive beam;

initiating or stopping sensing measurement on an integrated sensing and communication signal transmitted by the base station, based on a notification received from the base station; and feeding back a measurement result to the base station.

21. A computer program product, where the computer program product includes instructions which, when executed by a computer, cause implementation of the method according to any one of clauses 17 to 20.

The example embodiments of the present disclosure have been described above with reference to the drawings, but the present disclosure is of course not limited to the above examples. Those skilled in the art can obtain various changes and modifications within the scope of the appended claims, and it should be understood that these changes and modifications will naturally fall within the technical scope of the present disclosure.

For example, a plurality of functions included in one unit in the above embodiments may be implemented by separate devices. Alternatively, the multiple functions implemented by the multiple units in the above embodiments may be implemented by separate devices, respectively. In addition, one of the above functions can be realized by multiple units. Needless to say, such a configuration is included in the technical scope of the present disclosure.

In this specification, the steps described in the procedure include not only processes performed in time series in the described order, but also processes performed in parallel or individually rather than necessarily in time series. In addition, even in the steps processed in time series, needless to say, the order can be changed appropriately.

Although the present disclosure and its advantages have been described in detail, it should be understood that various modifications, replacements, and changes can be made without departing from the spirit and scope of the present disclosure as defined by the appended claims. Moreover, the terms "include" and "include", or any of their variants in the embodiments of the present disclosure are intended to cover a non-exclusive inclusion, so that a process, method, article, or device that includes a list of elements not only includes those elements but also includes other elements that are not expressly listed, or further includes elements inherent to such process, method, article, or device. In absence of more constraints, an element preceded by "includes a.." does not preclude existence of other identical elements in the process, method, article, or device that includes the element.

## Claims

1.  An electronic device for a base station, the electronic device comprising processing circuitry configured to:

    transmit an integrated sensing and communication signal via a first set of multiple transmit beams;
    in response to transmitting the integrated sensing and communication signal, receive a first set of echo signals corresponding to a terminal device;
    estimate a position of the terminal device based on the first set of echo signals; and
    send a first notification to the terminal device, so that the terminal device can determine a first receive beam matching the base station.

2.  The electronic device according to claim 1, wherein transmitting the integrated sensing and communication signal via the first set of multiple transmit beams comprises transmitting the integrated sensing and communication signal only in a single cycle of the first set of multiple transmit beams.

3.  The electronic device according to claim 1, wherein estimating the position of the terminal device comprises:

    sensing at least one of a distance, a velocity, or an angle of the terminal device relative to the base station based on information about a delay, a doppler frequency, and a phase difference of the first set of echo signals; and
    estimating the position of the terminal device relative to the base station based on at least one of the distance, the velocity, or the angle of the terminal device relative to the base station.

4.  The electronic device according to claim 1,

    wherein the processing circuitry is further configured to: determine a first receive beam matching the base station on a side of the terminal device based on the estimated position of the terminal device,
    wherein sending the first notification to the terminal device comprises indicating the determined first receive beam in the first notification.

5.  The electronic device according to claim 1, wherein sending the first notification to the terminal device comprises indicating a position of the terminal device relative to the base station in the first notification so as to facilitate the terminal device to determine a first receive beam matching the base station.

6.  The electronic device according to claim 1, wherein the processing circuitry is further configured to:

    determine a first transmit beam matching the terminal device from the first set of multiple transmit beams based on the estimated position of the terminal device;
    transmit an integrated sensing and communication signal via a second set of multiple transmit beams near the first transmit beam;
    in response to transmitting the integrated sensing and communication signal via the second set of multiple transmit beams, receive a second set of echo signals corresponding to the terminal device;
    re-estimate the position of the terminal device with higher accuracy based on the second set of echo signals; and
    determine a second transmit beam matching the terminal device from the second set of multiple transmit beams based on the re-estimated position.

7.  The electronic device according to claim 6, wherein the processing circuitry is further configured to:

    in response to transmitting the integrated sensing and communication signal via the second set of multiple transmit beams, receive a measurement report from the terminal device for the second set of multiple transmit beams; and
    verify whether the second transmit beam is an optimal transmit beam matching the terminal device based further on the measurement report.

8.  The electronic device according to claim 6, wherein the processing circuitry is further configured to: send a second notification to the terminal device to enable the terminal device to determine a second receive beam matching the base station.

9.  The electronic device according to claim 8, wherein the processing circuitry is further configured to: determine a second receive beam matching the base station on a side of the terminal device based on the re-estimated position, wherein sending the second notification to the terminal device comprises indicating the determined second receive beam in the second notification; or wherein sending the second notification to the terminal device comprises indicating a re-estimated position of the terminal device relative to the base station in the second notification so as to facilitate the terminal device to determine a second receive beam matching the base station.

**10.** The electronic device according to claim 4 or 9, wherein the first notification or the second notification comprises a transmission configuration indication (TCI) state, and a quasi-co-location type of the TCI state is type D.

**11.** An electronic device for a base station, the electronic device comprising processing circuitry configured to:

establish a beam pair link with a terminal device using a first transmit beam, and transmit an integrated sensing and communication signal via the first transmit beam at a first transmission frequency;

in response to transmitting the integrated sensing and communication signal, receive a first set of echo signals corresponding to the terminal device;

obtain a mobility state of the terminal device based on the first set of echo signals; and

determine a to-be-tracked receive beam of the terminal device based on the mobility state of the terminal device.

**12.** The electronic device according to claim 11, wherein the processing circuitry is further configured to: in response to determining that a change rate of the mobility state of the terminal device is above a threshold level, perform at least one of the following:

transmitting the integrated sensing and communication signal via the first transmit beam at a second transmission frequency that is higher than the first transmission frequency; or

notifying the terminal device to perform sensing measurement on the integrated sensing and communication signal and feed back a measurement result.

**13.** The electronic device according to claim 12, wherein the processing circuitry is further configured to: determine the to-be-tracked receive beam of the terminal device based on both the mobility state of the terminal device and the measurement result from the terminal device.

**14.** An electronic device for a terminal device, the electronic device comprising processing circuitry configured to:

determine a first receive beam matching a base station from a first set of multiple receive beams based on a notification received from the base station;

receive, via the first set of multiple receive beams, an integrated sensing and communication signal transmitted by the base station via a transmit beam; and

verify whether the first receive beam is an optimal receive beam matching the base station, based on a measurement on the integrated sensing and communication signal.

**15.** The electronic device according to claim 14, wherein the first notification comprises a transmission configuration indication (TCI) state, and a quasi-co-location type of the TCI state is type D.

**16.** An electronic device for a terminal device, the electronic device comprising processing circuitry configured to:

establish a beam pair link with a base station using a first receive beam;

initiate or stop sensing measurement on an integrated sensing and communication signal transmitted by the base station, based on a notification received from the base station; and

feed back a measurement result to the base station.

**17.** A method for a base station, comprising:

transmitting an integrated sensing and communication signal via a first set of multiple transmit beams;

in response to transmitting the integrated sensing and communication signal, receiving a first set of echo signals corresponding to a terminal device;

estimating a position of the terminal device based on the first set of echo signals; and

sending a first notification to the terminal device, so that the terminal device can determine a first receive beam matching the base station.

**18.** A method for a base station, comprising:

establishing a beam pair link with a terminal device using a first transmit beam, and transmitting an integrated sensing and communication signal via the first transmit beam at a first transmission frequency;

in response to transmitting the integrated sensing and communication signal, receiving a first set of echo signals corresponding to the terminal device;

obtaining a mobility state of the terminal device based on the first set of echo signals; and

determining a to-be-tracked receive beam of the terminal device based on the mobility state of the terminal device.

**19.** A method for a terminal device, comprising:

determining a first receive beam matching a base station from multiple receive beams based on a notification received from the base station; receiving, via the multiple receive beams, an integrated sensing and communication signal transmitted by the base station via a transmit beam; and

verifying whether the first receive beam is an optimal receive beam matching the base station, based on a measurement on the integrated sensing and communication signal.

20. A method for a terminal device, comprising:

establishing a beam pair link with a base station using a first receive beam;

initiating or stopping sensing measurement on an integrated sensing and communication signal transmitted by the base station, based on a notification received from the base station; and

feeding back a measurement result to the base station.

21. A computer program product, wherein the computer program product comprises instructions which, when executed by a computer, cause implementation of the method according to any one of claims 17 to 20.

**FIG. 1**

**FIG. 2**

**300A**

Transceiver Unit
302A

Sensing & Processing
Unit 304A

FIG. 3A

**300B**

Transceiver Unit
302B

Processing Unit 304B

FIG. 3B

<u>400</u>

```
┌──────────────────────────────────────────────┐
│   Transmit an integrated sensing and           │
│           communication signal 402             │
└──────────────────────────────────────────────┘
                      │
                      ▼
┌──────────────────────────────────────────────┐
│  Receive a set of echo signals corresponding   │
│        to a terminal device  404               │
└──────────────────────────────────────────────┘
                      │
                      ▼
┌──────────────────────────────────────────────┐
│  Estimate a position of the terminal device    │
│     based on the set of echo signals  406      │
└──────────────────────────────────────────────┘
                      │
                      ▼
┌──────────────────────────────────────────────┐
│  Perform beam management based on the          │
│        estimated position  408                 │
└──────────────────────────────────────────────┘
```

FIG. 4

**Base station**
**120**

**500**

**Terminal device**
**110**

ISAC signal 502

Echo signal 504

**Estimate a position with a**
**first accuracy based on**
**sensing 506**

First notification 508

FIG. 5

**Base station 120**    **600**    **Terminal device 110**

ISAC signal 602 →

← Echo signal 604

Estimate a position with a
second accuracy based on
sensing 606

Second notification 608 →

**FIG. 6**

**TCI State**

| TCI State ID |
| --- |

| QCL type 1 | QCL type 2 (optional) |
| --- | --- |
| ServCellIndex BWP-Id referSignal: {NZP-CSI-RS-ResourceID/SSB-Index} {TypeD} | ServCellIndex BWP-Id referSignal: {NZP-CSI-RS-ResourceID/SSB-Index} {TypeD} |

**FIG. 7**

Terminal device      __800__      Base station
110         ↘         120

Establish a beam pair link 802

Transmit an ISAC signal at a first frequency 804

Echo signal 806

Based on sensing, determine a mobility state of the terminal device and a to-be-tracked beam 808

Transmit an ISAC signal at a second frequency 810

Echo signal 812

Based on echo sensing, determine a mobility state of the terminal device and a to-be-tracked beam 814

FIG. 8

Terminal device
110

<u>900</u>

Base station
120

Establish a beam pair link 902

Transmit an ISAC signal at a first
frequency 904

Echo signal 906

Based on sensing, determine a
mobility state of the terminal
device and a to-be-tracked
beam 908

ISAC signal; notification message 910

Based on measurement,
determine a to-be-tracked
beam 911

Echo signal 912

Measurement report 913

Based on echo sensing and
measurement report, determine
a mobility state of the terminal
device and a to-be-tracked
beam 914

ISAC signal; notification message 916

FIG. 9

1000

Base station
120                          AMF                          SF

Obtain sensing data based
on its own sensing/based
on a feedback from a
terminal device 1002

Sensing data 1004

Process the sensing
data 1006

Sensing data
processing result
1008

FIG. 10

1100

Determine a first receive beam matching a base station from multiple receive beams 1102

Receive, via the multiple receive beams, an ISAC signal transmitted by the base station 1104

Verify whether the first receive beam is an optimal receive beam matching the base station 1106

FIG. 11

1200

Establish a beam pair link with a base station using a first receive beam 1202

Initiate or stop sensing measurement on an ISAC signal transmitted by the base station 1204

Feed back a measurement result to the base station 1206

FIG. 12

**FIG. 13**

1400

1410 1410 1420

1425

RADIO COMMUNICATION I/F

1427 1426

RF BB

1427 1426

RF BB

⋮ ⋮

1421

CONTROLLER

1424 1423 1422

NETWORK I/F MEMORY

**FIG. 14**

**FIG. 15**

**FIG. 16**

FIG. 17

## INTERNATIONAL SEARCH REPORT

International application No.

**PCT/CN2024/119554**

### A. CLASSIFICATION OF SUBJECT MATTER

H04W 72/044(2023.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, DWPI, ENTXT: 波束, 感知通信, 通感, 通感一体, 回波, 宽, 窄, 位置, beam, communication, ISAC, position, sensing

### C. DOCUMENTS CONSIDERED TO BE RELEVANT

| Category* | Citation of document, with indication, where appropriate, of the relevant passages | Relevant to claim No. |
|---|---|---|
| X | CN 115988523 A (THE RESEARCH INSTITUTE OF CHINA MOBILE COMMUNICATION CO., LTD. et al.) 18 April 2023 (2023-04-18) description, paragraphs 41-109 and 139, and figures 3-4 | 1-21 |
| A | CN 116390116 A (VIVO MOBILE COMMUNICATION CO., LTD.) 04 July 2023 (2023-07-04) entire document | 1-21 |
| A | CN 113783672 A (CHINA ACADEMY OF INFORMATION AND COMMUNICATIONS TECHNOLOGY) 10 December 2021 (2021-12-10) entire document | 1-21 |
| A | WO 2023121522 A1 (TELEFONAKTIEBOLAGET LM ERICSSON) 29 June 2023 (2023-06-29) entire document | 1-21 |
| A | WO 2023005145 A1 (SPREADTRUM COMMUNICATIONS (SHANGHAI) CO., LTD.) 02 February 2023 (2023-02-02) entire document | 1-21 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 December 2024** | **23 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/119554**

### C. DOCUMENTS CONSIDERED TO BE RELEVANT

| Category* | Citation of document, with indication, where appropriate, of the relevant passages | Relevant to claim No. |
|---|---|---|
| A | CHINA TELECOM et al. "Motivation on Integrating Sensing with Communication in NR" *3GPP TSG-RAN Meeting #99, RP-230325*, 23 March 2023 (2023-03-23), entire document | 1-21 |

**INTERNATIONAL SEARCH REPORT**
Information on patent family members

International application No.

**PCT/CN2024/119554**

| Patent document cited in search report | | | Publication date (day/month/year) | Patent family member(s) | | | Publication date (day/month/year) |
|---|---|---|---|---|---|---|---|
| CN | 115988523 | A | 18 April 2023 | None | | | |
| CN | 116390116 | A | 04 July 2023 | WO | 2023116673 | A1 | 29 June 2023 |
| | | | | US | 2024340949 | A1 | 10 October 2024 |
| | | | | EP | 4456596 | A1 | 30 October 2024 |
| CN | 113783672 | A | 10 December 2021 | None | | | |
| WO | 2023121522 | A1 | 29 June 2023 | EP | 4454182 | A1 | 30 October 2024 |
| | | | | CN | 118402199 | A | 26 July 2024 |
| WO | 2023005145 | A1 | 02 February 2023 | CN | 115701168 | A | 07 February 2023 |

Form PCT/ISA/210 (patent family annex) (July 2022)